# EUROPÄISCHE PATENTANMELDUNG

(11) **EP 0 788 243 A2**
(43) Veröffentlichungstag der Anmeldung: **06.08.1997**
(21) Anmeldenummer: 97101236.4
(22) Anmeldetag: 27.01.1997
(51) Int. Cl.: H04B 1/38

(54) **Mobiltelefon-Modul**

(30) Priorität: 02.02.1996 DE 19603814
(71) Anmelder: SIEMENS AKTIENGESELLSCHAFT, 80333 München (DE)
(72) Erfinder: Güntzer, Peter, 82194 Gröbenzell (DE)

(57) **Zusammenfassung**

Es wird ein Mobiltelefon-Modul als integraler Bestandteil eines Systems nachrichtentechnischer Geräte, beispeilsweise von Autoradio- oder Autonavigationseinheiten beschrieben. Das Bedienteil der Geräteeinheit ist abnehmbar ausgebildet. Eine an der Frontseite der Geräteeinheit, hinter dem abnehmbaren Bedienteil angeordnete Schnittestelle zwischen der Geräteeinheit und dem Bedienteil wird bei entsprechender Ausbildung zugleich verwendet für Nach-Booten (Software-Updates), Diagnose und Service des Mobiltelefon-Moduls.

## Beschreibung

Die Erfindung bezieht sich auf ein Mobiltelefon-Modul als integraler Bestandteil eines Systems nachrichtentechnischer Geräte, beispielsweise von Autoradio- oder Autonavigationseinheiten, mit einem abnehmbar ausgebildeten Bedienteil und einer Schnittstelle zwischen der Systemeinheit und dem Bedienteil.

Ein Mobiltelefon benötigt zu seinem Betrieb eine Software. Diese wird bei der Fertigung in einen Speicher geschrieben, was man Booten des Systems nennt. Neue System-Features, also Funktionalitäten des Gerätes, Anpassungen an Netzbetreibersoftware oder an neue Umgebungsbedingungen - und natürlich unter Umständen die Beseitigung von Softwareproblemen - zwingen von Zeit zu Zeit zu Software-Updates. Bisher wird dies bei Mobiltelefonen meist derart gelöst, daß Vertrags-händlern die nötigen Geräte und die Software zur Verfügung gestellt werden; ein Kunde kann dann gegen Entgelt eine neue Software vom Händler in sein Gerät laden lassen. Dazu schließt dieser das Mobiltelefon über eine eingebaute Zubehör-Steckverbindung für eine entsprechende Zeit (eine bis wenige Minuten) an eine geeignete Vorrichtung an, welche die neue Software in das Telefon lädt. Dieser Vorgang wird als Nach-Booten bezeichnet. Die Schnittstelle zum Nach-Booten ist bei vielen Mobiltelefonen an der Zubehör-Steckverbindung von außen ohne Öffnen des Gerätes zugänglich und der Vorgang kann daher problemlos in sehr kurzer Zeit vorgenommen werden.

Mobiltelefone haben eine verhältnismäßig kurze Produktionszykluszeit (meist weniger als ein Jahr). Trotz weiterer Versorgung mit Ersatzteilen und Software-Updates kann davon ausgegangen werden, daß nach einigen Jahren viele Kunden auf ein neues Gerät umgestiegen sind.

Bei einem fest in einem Auto(radio) eingebauten Gerät wird dies sicher nicht der Fall sein. Es ist damit zu rechnen, daß viele dieser Geräte über den größten Teil der Lebensdauer des Autos auch zum Einsatz kommen. Umso wichtiger ist also die Möglichkeit, wenigstens die Software relativ leicht an mit der Zeit veränderte Bedingungen anpassen zu können.

Gegenstand der vorliegenden Erfindung ist ein solches in Autoradio-, Autonavigations- und verwandten Einheiten eingesetztes Modul, das für den Benutzer unsichtbar in oder am zugehörigen Gerät montiert und vollständig von diesem gesteuert wird. Die Bedienung eines derartig integrierten Telefons erfolgt dabei über die Frontplatte, beispielsweise des Autoradios, dessen Software über einen internen Bus mit dem Mobiltelefon-Modul kommuniziert.

Viele Autoradios der mittleren und oberen Preisklasse verfügen als Diebstahlschutz über ein werkzeuglos abnehmbares Bedienteil, das es dem Benutzer erlaubt, dieses essentielle und doch zumeist handliche Teil beim Verlassen des Autos mitzunehmen und den zurückbleibenden Autoradiokörper somit für den Dieb kaum brauchbar und damit uninteressant zu machen.

Der Erfindung liegt die Aufgabe zugrunde, für ein derartiges Mobiltelefon-Modul eine Lösung anzugeben für eine gut zugängliche Schnittstelle.

Diese Aufgabe wird gemäß der Erfindung in der Weise gelöst, daß auf der hinter dem Bedienteil liegenden Gerätefront separate Kontaktelemente angeordnet sind, an die die zugehörigen Kontaktelemente einer Einrichtung zum Übertragen der Software für Betriebs- und Wartungsfunktionen (Inbetriebnahme = Booten, Software-Update = Nach-Booten, Diagnose, Service) des Mobiltelefon-Moduls und gegebenenfalls für die Steuerung des Systems anschließbar sind oder daß auf der hinter dem Bedienteil liegenden Gerätefront eine separate Infrarot-Schnittstelle angeordnet ist, die mit dem zugehörigen Sende/Empfangseinrichtungen für die Infrarot-Übertragung einer Einrichtung zum Übertragen der Software für Betriebs- und Wartungsfunktionen (Inbetriebnahme = Booten, Software-Update = Nach-Booten, Diagnose, Service) des Mobiltelefon-Moduls und gegebenenfalls für die Steuerung des Systems in Verbindung steht.

Bei einer anderen erfindungsgemäßen Lösung ist ein in seiner Form dem Bedienteil angepaßter, lediglich die Schnittstelle enthaltender Steckadapter vorgesehen, der anstelle des abnehmbaren Bedienteils auf das Gerät aufsetzbar ist und an dessen an der Vorderseite liegende Kontakte der Schnittstelle die Signale für Betriebs- und Wartungsfunktionen des Mobiltelefon-Moduls und gegebenenfalls für die Steuerung des Systems geführt werden.

Eine vierte erfindungsgemäße Lösung zeichnet sich aus durch ein in seiner Form und der Schnittstellenkontaktierung dem abnehmbaren Bedienteil entsprechendes Bedienteilgehäuse mit intergrierter Elektronik für Betriebs- und Wartungsfunktionen des Mobiltelefon-Moduls und gegebenenfalls für die Steuerung des Systems, das anstelle des Bedienteils auf das Gerät aufsetzbar ist.

Der Grundgedanke der erfindungsgemäßen Lösungen besteht darin, bei der Realisierung der Schnittstelle für das Mobiltelefon-Modul den Bereich des abnehmbar ausgebildeten Bedienteils mit einzubeziehen.

Durch die erfindungsgemäßen Maßnahmen erhält man eine von außen gut zugängliche Schnittstelle als Zugriff auf das Mobiltelefon-Modul. Das ist für ein System von mehreren Geräten, also beispielsweise ein Mobiltelefon in Verbindung mit einem Autoradio sehr wichtig. Aufgrund der Einbausituation des Mobiltelefon-Moduls innerhalb bzw. auf der Rückseite des Autoradios ist diese Schnittstelle von außen nicht ohne weiteres zugänglich. Die Signale stehen dabei zwar am demontierten Mobiltelefon-Modul an dessen Verbindung zum Autoradio zur Verfügung, dazu muß aber das Autoradio ausgebaut und danach das Mobiltelefon-Modul vom Autoradio getrennt werden, um Zugang zur Schnittstelle zu erhalten. Dieses Problem wird beim Erfindungsgegenstand in optimaler Weise gelöst.

Vorteilhafte Ausgestaltungen und Weiterbildungen des Erfindungsgegenstandes sind in den Unteransprüchen angegeben.

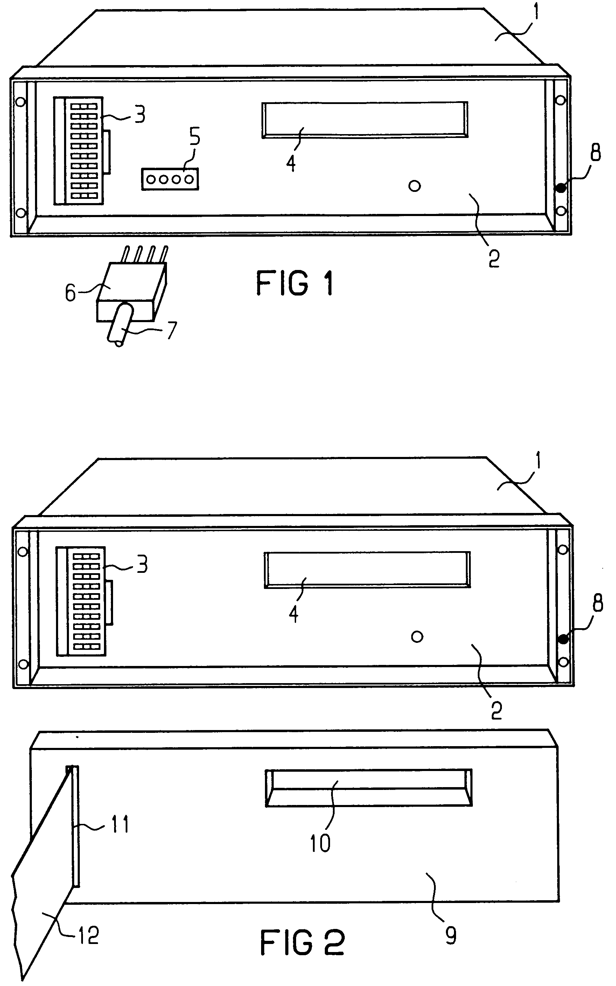

Nachstehend wird die Erfindung anhand von in der Zeichnung dargestellten Ausführungsbeispielen näher erläutert. Die Fig. 1 bis 3 zeigen verschiedene Varianten für die Ausgestaltung der Schnittstelle im Bereich des abnehmbaren Bedienteils zu deren Nutzung für das Mobiltelefon-Modul. Das abgenommene Bedienteil des Gerätes ist hierbei nicht mit dargestellt. Die Figuren zeigen das Gerät in einer perspektivischen Darstellung von der Frontseite her und davorliegend spezielle Einrichtungen, die anstelle des Bedienteils auf das Gerät aufsetzbar sind. Bei abgenommenem Bedienteil zeigt das Gerät eine blanke Frontplatte an dieser Stelle, die bei den dargestellten Ausführungsbeispielen die ganze Gerätfront in Anspruch nimmt. Die Frontpartie besteht nun je nach Gerät nur aus dem Kassettenschacht, meist einem Reset-Knopf und/oder einer blinkenden LED - und in jedem Fall aus den Kontakten der Schnittstelle zum abgenommenen Bedienteil.

Beim Ausführungsbeispiel nach Fig. 1 ist an der Frontseite 2 des Gerätes 1, an der die Kontakte 3 einer Schnittstelle zum Bedienteil und ein Kassettenschacht 4 angeordnet sind, ein weiterer Kontaktsatz 5 in Form einer 4-poligen Boot-Buchse zum Nach-Booten und für Wartungsfunktionen montiert. Diese Fläche kommt an der Gerätfront zum Vorschein, wenn das Bedienteil abgenommen wird. Zum Booten oder für Wartungsfunktionen wird ein Stecker 6, der über ein Kabel 7 mit dem Boot-Gerät, z.B. einem Laptop verbunden ist, in die Boot-Buchse 5 gesteckt. Seitlich an der Gerätefront ist eine Entriegelung 8 für das Bedienteil angeordnet. Die Boot-Buchse 4 ist hierbei die meiste Zeit mechanisch durch das aufgesetzte Bedienteil geschützt, ist leicht, ohne Werkzeug zu erreichen und kann montiert werden, ohne das Design der Bedienfront durch sichtbare Elemente zu stören. Die Buchse ist auch für Laien leicht erreichbar ohne irgendwelche Demontagen am Autoradiokörper, bei gleichzeitiger maximaler Freiheit der Buchsenplazierung und des Buchsengesichts, da Design und Platz hier eine untergeordnete Rolle spielen. Zusätzlicher Vorteil ist, daß die Kontakte separat von Autoradiosignalen zur Verfügung stehen und somit - abgesehen von der Versorgung des Mobiltelefon-Moduls - das Autoradio am Boot- und Wartungsvorgang selbst nicht beteiligt ist.

Beim Ausführungsbeispiel nach Fig. 2 ist ein umfunktioniertes Bedienteil als Boot-Adapter vorgesehen, der anstelle des eigentlichen Bedienteils auf die Frontseite 2 des Gerätes 1 aufsetzbar ist. Hierbei werden als Kontaktsatz für das NachBooten sowie für Diagnose und Service die bereits vorhandenen Kontakte 3 der Schnittstelle, die zum abnehmbaren Bedienteil führen, benutzt. Zum Nach-Booten sowie für Wartungsfunktionen wird der als Steckadapter ausgebildete Boot-Adapter 9 aufgesteckt, der mechanisch dem Bedienteil nachempfunden ist und dieses während des Boot-Vorganges ersetzt. Über ein Kabel 12 sind Kontaktelemente 11 am Steckadapter 9 mit einem Boot-Gerät verbunden. Mit 10 ist eine Öffnung zum Kassettenschacht 4 bezeichnet.

Vorteile dieser Lösung sind, daß keine eigenen Boot-Kontakte und damit keine aufwendigen Abstimmmungen zwischen den verschiedenen Geräten (Autoradio und Mobiltelefon) erforderlich sind, die gegebenenfalls von verschiedenen Herstellern stammen, und Teile-Kosten für zusätzliche Stecker/Buchsen im Gerät entfallen. Vorhandene Elemente können verwendet werden; es ist lediglich eine neue Frontplatte für das Bedienteil erforderlich, so daß die zum Booten notwendigen Signale außen z.B. an einem Flachbandkabel zur Verfügung stehen. Da das abnehmbare Bedienteil oft den Ein-/Ausschalter und ähnlich elementare Funktionen beinhaltet, ist davon auszugehen, daß das Autoradio in vielen Fällen über die entsprechende Schnittstelle komplett bedient werden kann. Der Boot-Adapter kann somit das Autoradio und damit auch das Mobiltelefon-Modul einschalten, in den für das Booten erforderlichen Zustand bringen, Booten und danach den Vorgang mit dem Abschalten der Komponenten abschließen. Das Abnehmen des Bedienteils nach Lösen einer Entriegelung 8 kann in wenigen Sekunden per Kopfdruck geschehen. Die Zeitersparnis beim Nach-Booten im Vergleich zu einer Lösung, die den Ausbau des Autoradios und womöglich das Abtrennen des Mobiltelefon-Moduls erfordert, ist somit erheblich. Das Autoradio wird in der dafür vorgesehenen Umgebung betrieben/gebootet. Ein ausgebautes Autoradio bzw. das Mobiltelefon-Modul müße zumindest extern zusätzlich zu den Steuersignalen mit Strom versorgt werden, um nach-gebootet werden zu können. Im eingebauten Zustand übernimmt dies die Autobatterie. Wesentlich ist ferner die Möglichkeit, diese Buchse auch zu Kontroll- und Diagnosezwecken im Rahmen von Feldversuchen oder Reparaturen zu benutzen.

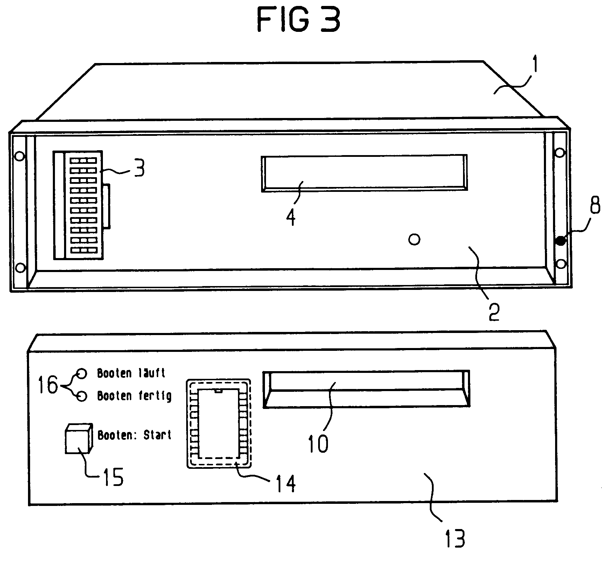

Fig. 3 zeigt eine Ausführungsform mit einem umfunktionierten Bedienteil als autonomes Boot-Gerät. Hierbei ist die komplette zum Booten notwendige Elektronik, also für Booten, Nach-Booten, Diagnose und Service in einem Bedienteilgehäuse 13 untergebracht, das in seiner Form und der Schnittstellenkontaktierung dem abnehmbaren Bedienteil angepaßt ist und anstelle von diesem auf die Frontseite des Gerätes 1 aufsetzbar ist. Da das Bedienteil inklusive der meist integrierten Displaybeleuchtung vom Autoradio mit Strom versorgt wird, sind theoretisch alle Voraussetzungen geschaffen, die Boot-Hardware auf das Bedienteil zu beschränken.

Das Booten läuft dabei wie folgt ab: Das Boot-Bedienteil 13 wird anstelle des Original-Bedienteils in das Radio gesteckt. Danach beginnt das Booten selbst inklusive der entsprechenden Ansteuerung des Radios automatisch. Ist der Boot-Vorgang abgeschlossen, so wird dies dem Benutzer angezeigt, worauf dieser das Boot-Bedienteil wieder entnimmt. Auf der Frontseite des Boot-Bedienteils 13 sind hierfür eine Taste 15 zum Starten des Booten sowie Anzeigen 16 für "Booten läuft" und "Booten fertig" angeordnet.

Die Software befindet sich beim beschriebenen Ausführungsbeispiel in einem sogenannten Master-EPROM, das von außen zugänglich und werkzeuglos gewechselt wird. Ein Master-EPROM stellt nur eine mögliche Alternative dar, die Information (Software-Update) auswechselbar bereitzustellen. Generell kann die Bereitstellung der Information in der Weise erfolgen, daß das Bedienteil die Information zuerst von einem PC übertragen bekommt und nichtflüchtig zwischenspeichert, um sie dann über das Master-EPROM an das Mobiltelefon-Modul zu übertragen. Das Boot/Diagnose/Service-Bedienteil bekommt also die zu bootende Software nicht über ein Master-EPROM, sondern vom PC, der seinerseits die Software z.B. per Diskette erhält.

Von Vorteil ist auch hierbei, daß keine Definition und Entwicklung von neuen Steckern erforderlich ist, was einen erheblichen Aufwand bei den hier gegebenen Anforderungen bedeuten würde, sondern stattdessen in der Automobilindustrie bereits bewährte Kontaktsätze Verwendung finden können. Es gibt zudem keine Probleme mit dem Einbauplatz eines zusätzlichen Kontaktsatzes. Da gegebenenfalls eine reine Software-Lösung seitens des Automobilherstellers möglich ist, entfallen auch zusätzliche Bauteile. Wichtig ist auch der leichte Zugriff für Entwicklung, Service und Reparatur auf das eingebaute, versorgte und mit einer Antenne beschaltete Mobiltelefon-Modul. Nach-Booten, Diagnose und Service können zeitsparend und ohne Zusatzgeräte lediglich durch Einlegen und Ausklinken des Boot-Bedienteils erfolgen. An der Autoradio-Front ergeben sich keine Design-Veränderungen.

Bei den Ausführungsformen, die Kontakte der Schnittstelle verwenden, ist vom Autoradio-Hersteller für das Booten die Möglichkeit vorzusehen, die benötigten Mobiltelefon-Modul-Signale auf die Bedienteil-Schnittstelle umzulegen. Dies kann in unterschiedlicher Weise erfolgen: Die Signale stehen an eigenen Pins der Schnittstelle immer zur Verfügung und werden exklusiv zum Booten/Diagnose/Service genutzt. Es kann aber auch ein mechanisches Umschalten der Signale beim Einstecken des Boot/Diagnose/Service-Bedienteils erfolgen oder ein elektrisches Umschalten z.B. mit (Halbleiter-) Relais der Signale auf Kontaktelemente der Schnittstelle. Eine weitere Möglichkeit besteht im Software-gesteuerten Durchschleifen der Signale durch den Prozessor des Autoradios, in dem sie sowieso zur Verfügung stehen, auf die Schnittstelle. Dadurch ist gegebenenfalls überhaupt keine zusätzliche Hardware im Autoradio nötig.

Ein Grundgedanke der Erfindung besteht auch darin, nicht nur das Mobiltelefon-Modul zu beeinflussen, sondern sowieso bereits vorhandene Einflußmöglichkeiten auf das ganze System über die vorhandene Schnittstelle zu nutzen. Das Boot/Service/Diagnose-Bedienteil arbeitet weitestgehend autark, so daß keine weiteren externen Geräte notwendig sind.

Das Boot/Service/Diagnose-Bedienteil kann evtl. auch über die Schnittstelle des abnehmbaren Bedienteils mit Strom versorgt werden. Außerdem kann das Boot/Service/Diagnose-Bedienteil über diese Schnittstelle auch das ganze System, also nicht nur das Mobiltelefon, steuern, also zuerst einmal in einen Zustand bringt, in dem es dann unmittelbaren Zugriff über die Schnittstelle auf das Mobiltelefon-Modul hat. Dies beinhaltet das vorstehend beschriebene Umlegen der Signale.

## Patentansprüche

1. Mobiltelefon-Modul als integraler Bestandteil eines Systems nachrichtentechnischer Geräte, beispielsweise von Autoradio- oder Autonavigationseinheiten, mit einem abnehmbar ausgebildeten Bedienteil und einer Schnittstelle zwischen der Systemeinheit und dem Bedienteil, dadurch **gekennzeichnet**, daß auf der hinter dem Bedienteil liegenden Gerätefront separate Kontaktelemente angeordnet sind, an die die zugehörigen Kontaktelemente einer Einrichtung zum Übertragen der Software für Betriebs- und Wartungsfunktionen (Inbetriebnahme = Booten, Software-Update = Nach-Booten, Diagnose, Service) des Mobiltelefon-Moduls und gegebenenfalls für die Steuerung des Systems anschließbar sind.

2. Mobiltelefon-Modul als integraler Bestandteil eines Systems nachrichtentechnischer Geräte, beispielsweise von Autoradio- oder Autonavigationseinheiten, mit einem abnehmbar ausgebildeten Bedienteil und einer Schnittstelle zwischen der Systemeinheit und dem Bedienteil, dadurch **gekennzeichnet**, daß auf der hinter dem Bedienteil liegenden Gerätefront eine separate Infrarot-Schnittstelle angeordnet ist, die mit den zugehörigen Sende/Empfangseinrichtungen für die Infrarot-Übertragung einer Einrichtung zum Übertragen der Software für Betriebs- und Wartungsfunktionen (Inbetriebnahme = Booten, Software-Update = Nach-Booten, Diagnose, Service) des Mobiltelefon-Moduls und gegebenenfalls für die Steuerung des Systems in Verbindung steht.

3. Mobiltelefon-Modul als integraler Bestandteil eines Systems nachrichtentechnischer Geräte, beispielsweise von Autoradio- oder Autonavigationseinheiten, mit einem abnehmbar ausgebildeten Bedienteil und einer Schnittstelle zwischen der Systemeinheit und dem Bedienteil, dadurch **gekennzeichnet**, daß ein in seiner Form dem Bedienteil angepaßter, lediglich die Schnittstelle enthaltender Steckadapter vorgesehen ist, der anstelle des abnehmbaren Bedienteils auf das Gerät aufsetzbar ist und an dessen an der Vorderseite liegende Kontakte der Schnittstelle die Signale für Betriebs- und Wartungsfunktionen des Mobiltelefon-Moduls und gegebenenfalls für die Steuerung des Systems geführt werden.

4. Mobiltelefon-Modul als integraler Bestandteil eines Systems nachrichtentechnischer Geräte, beispielsweise von Autoradio- oder Autonavigationseinheiten, mit einem abnehmbar ausgebildeten Bedienteil und einer Schnittstelle zwischen der Systemeinheit und dem Bedienteil, **gekennzeichnet** durch ein in seiner Form und der Schnittstellenkontaktierung dem abnehmbaren Bedienteil entsprechendes Bedienteilgehäuse mit intergrierter Elektronik für Betriebs- und Wartungsfunktionen des Mobiltelefon-Moduls und gegebenenfalls für die Steuerung des Systems, das anstelle des Bedienteils auf das Gerät aufsetzbar ist.

5. Mobiltelefon-Modul nach Anspruch 4, dadurch **gekennzeichnet**, daß sich die Software für die Betriebs- und Wartungsfunktionen in einem in dem aufsetzbaren Bedienteil angeordneten, auswechselbaren Speicherelement befindet.

6. Mobiltelefon-Modul nach Anspruch 5, dadurch **gekennzeichnet**, daß die Information (z.B. Software-Update) in dem Speicherelement nichtflüchtig zwischengespeichert ist bei der Übertragung von einem Datenträger an das Mobiltelefon-Modul.

7. Mobiltelefon-Modul nach Anspruch 5 oder 6, dadurch **gekennzeichnet**, daß das Speicherelement von außen zugänglich und werkzeuglos auswechselbar ist.

8. Mobiltelefon-Modul nach einem der Ansprüche 5 bis 6, dadurch **gekennzeichnet**, daß das Speicherelement ein Master-EPROM ist.

9. Mobiltelefon-Modul nach einem der Ansprüche 4 bis 8, dadurch **gekennzeichnet**, daß das Booten automatisch nach dem Aufstecken des Boot-Bedienteils geschieht und sein Abschluß zur Anzeige gebracht wird.

10. Mobiltelefon-Modul nach einem der Ansprüche 5 bis 7, dadurch **gekennzeichnet**, daß Anschlüsse für die Signale des Mobiltelefon-Moduls auf die Bedienteil-Schnittstelle gelegt sind.

11. Mobiltelefon-Modul nach Anspruch 10, dadurch **gekennzeichnet**, daß für die Signale der Betriebs- und Wartungsfunktionen des Mobiltelefon-Moduls separate Kontaktelemente (Pins) der Schnittstelle vorgesehen sind.

12. Mobiltelefon-Modul nach Anspruch 10, **gekennzeichnet** durch ein mechanisches Umschalten der Signale beim Einstecken des Boot/Service-Bedienteils.

13. Mobiltelefon-Modul nach Anspruch 10, **gekennzeichnet** durch ein elektrisches Umschalten, beispielsweise mit Relais, der Signale auf Kontaktelemente der Schnittstelle.

14. Mobiltelefon-Modul nach Anspruch 10, **gekennzeichnet** durch ein Software-gesteuertes Durchschleifen der Signale durch ein Rechnerelement des Systems, beispielsweise des Autoradios, auf die Schnittstelle.

15. Mobiltelefon-Modul nach einem der Ansprüche 4 bis 14, dadurch **gekennzeichnet**, daß das Bedienteil für Betriebs- und Wartungsfunktionen über die Schnittstelle des abnehmbaren Bedienteils mit Strom versorgt wird.
